Europäisches Patentamt

European Patent Office

Office européen des brevets

(19)

(11) Numéro de publication : **0 092 493**
**B1**

(12) **FASCICULE DE BREVET EUROPÉEN**

(45) Date de publication du fascicule du brevet :
15.04.87

(51) Int. Cl.⁴ : **B 62 D 21/02**

(21) Numéro de dépôt : 83420068.5

(22) Date de dépôt : 20.04.83

(54) Traverse à fonctions multiples pour le châssis d'un véhicule utilitaire.

(30) Priorité : 21.04.82 FR 8207275

(43) Date de publication de la demande :
26.10.83 Bulletin 83/43

(45) Mention de la délivrance du brevet :
15.04.87 Bulletin 87/16

(84) Etats contractants désignés :
AT BE CH DE FR GB IT LI LU NL SE

(56) Documents cités :
DE-C-   748 080
DE-C-   842 452
GB-A-   353 060
GB-A-   416 451
GB-A-   516 727
GB-A-   797 911
US-A- 3 120 396

(73) Titulaire : RENAULT VEHICULES INDUSTRIELS
Société dite:
129 Rue Servient
F-69003 Lyon (FR)

(72) Inventeur : Guerin, Jean
84 bis rue Jules Guesde
F-69200 Venissieux (FR)

(74) Mandataire : Maisonnier, Jean
Bureau Maisonnier 26 Rue Servient
F-69003 Lyon (FR)

Jouve, 18, rue St-Denis, 75001 Paris, France

EP 0 092 493 B1

## Description

La présente invention est relative à des perfectionnements apportés dans la conception du châssis, notamment pour un véhicule utilitaire tel qu'un camion.

On sait que de nombreux organes ou accessoires sont fixés sur le châssis d'un véhicule routier. En particulier, on y monte une cabine de pilotage, le moteur du véhicule, les silencieux d'échappement, le ou les filtres à air du moteur, un coffre pour les accumulateurs électriques, des marchepieds, des canalisations d'air, des canalisations d'échappement, un réservoir à combustible, voire une ou plusieurs roues de secours, etc. Pour cela, il est connu de percer en divers endroits les longerons du châssis, afin d'y adapter les fixations des divers organes. Cette solution connue présente divers inconvénients, notamment :

du fait de la présence des trous percés dans le châssis, on affaiblit la résistance mécanique des longerons ;

ces fixations sont fortement sollicitées pendant la marche du véhicule, du fait des déformations dynamiques du châssis : il est donc difficile de réaliser des fixations solides et fiables, pour les dispositifs et organes du genre énuméré ci-dessus ;

le prix de revient est élevé, du fait de la complication et de la robustesse nécessaires pour les fixations.

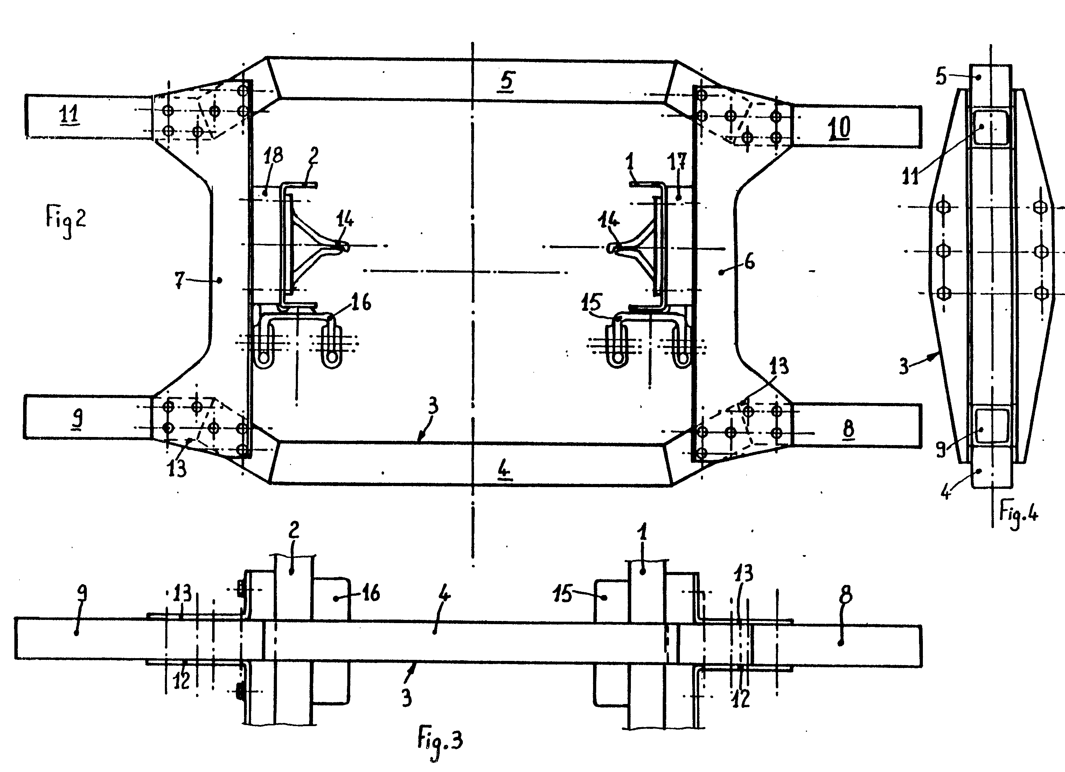

L'état de la technique antérieure peut être illustré par le brevet USA 3 120 396, dans lequel on voit que chaque traverse reçoit la suspension par ressorts d'un essieu arrière (fig. 3). Chaque traverse n'entoure pas les longerons 22. De plus, les longerons 32 doivent être reliés par des voiles longitudinaux soudés 36. On voit donc que la traverse 9 de ce brevet USA 3 120 396 ne peut pas être rapportée sur un châssis connu sans en modifier les longerons.

La présente invention a pour but d'éviter ces inconvénients, en réalisant un dispositif qui simplifie l'architecture du véhicule, améliore l'accessibilité à divers organes, et augmente l'espace disponible sur le châssis sans nuire pour autant à la bonne rigidité de ce dernier.

Un dispositif de fixation selon l'invention, notamment pour le châssis d'un véhicule utilitaire, est caractérisé en ce qu'il comprend au moins une traverse de forme composite rectangulaire à deux grands côtés horizontaux et deux petits côtés verticaux, disposée autour des longerons du châssis qui la traversent, chacun des montants étant fixé sur la face extérieure du longeron correspondant.

Autrement dit, les différentes fixations sont adaptées sur la traverse, et non plus directement sur les longerons : la résistance mécanique de ces derniers n'est donc pas affaiblie par la mise en place des fixations.

Suivant une autre caractéristique de l'invention, les grands côtés horizontaux de la traverse rectangulaire sont prolongés chacun par un bras d'appui rigide.

Suivant une autre caractéristique de l'invention, des moyens de fixation sont prévus sur la traverse, pour recevoir les organes du véhicule à fixer dans cette zone.

Le dessin annexé, donné à titre d'exemple non limitatif, permettra de mieux comprendre les caractéristiques de l'invention.

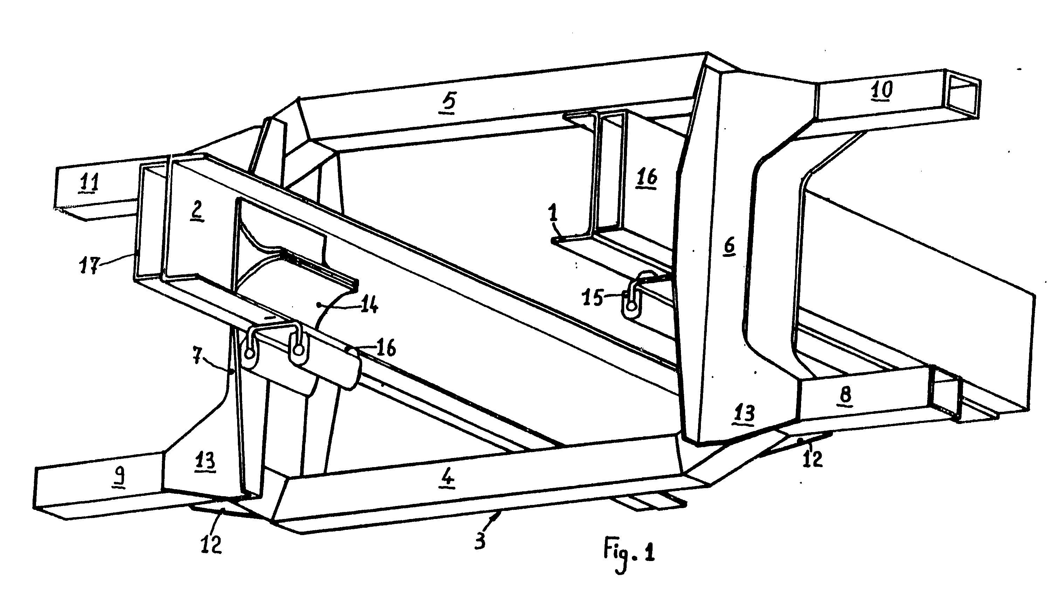

Figure 1 est une vue d'ensemble montrant en perspective un mode de réalisation possible d'une traverse selon l'invention, montée sur les deux longerons d'un châssis de camion.

Figure 2 en est une vue en élévation de la traverse.

Figure 3 en est une vue en plan.

Figure 4 en est une vue latérale.

Figure 5 montre une variante.

Le dispositif illustré sur les dessins est destiné à équiper les longerons principaux 1 et 2 d'un châssis de camion.

Ce dispositif comprend une traverse 3 qui présente sous la forme d'un cadre sensiblement rectangulaire dont les deux grands côtés 4 et 5 sont orientés pratiquement à l'horizontale, tandis que les deux montants verticaux 6 et 7 sont placés de part et d'autre des longerons 1 et 2. Le montant 6 est fixé définitivement sur la face extérieure d'une entretoise 17, tandis que le montant 7 est fixé de manière analogue sur la face extérieure d'une entretoise 18.

De part et d'autre des montants 6 et 7, le côté inférieur 4 se prolonge par deux bras 8 et 9 sensiblement horizontaux, mais situés à un niveau légèrement plus haut que celui du côté 4. De même, le côté supérieur 5 se prolonge au-delà des montants 6 et 7 par deux bras 10 et 11 sensiblement horizontaux, mais situés à un niveau légèrement inférieur à celui du côté 5.

La jonction triple entre le côté 4, l'un des montants 6 et 7, et l'un des bras 8 ou 9 est renforcée par des goussets se prolonge vers le bas en renforçant sur toute sa longueur le montant 6 ou 7 concerné, après quoi ils renforcent également la jonction triple entre le montant 6 ou 7, l'extrémité correspondante du côté 5, et le bras concerné 10 ou 11.

Les entretoises 17 et 18 sont fixées sur les faces externes des longerons 1 et 2.

L'ensemble de la traverse 3 constitue ainsi une ossature rigide, solidement liée aux longerons 1 et 2 du châssis, sans affaiblir ceux-ci pour autant. Diverses fixations sont alors prévues sur la traverse 3, pour recevoir les organes ou accessoires du véhicule.

Il peut s'agir par exemple de supports 14 pour la fixation du moteur.

Par ailleurs des ferrures 15 et 16 peuvent être fixées sur les longerons 1 et 2, notamment pour fixer les ressorts de suspension.

Bien entendu, on peut prévoir plusieurs traverses 3, réparties en divers emplacements, sur la longueur des longerons 1 et 2 du châssis.

Ce dispositif présente divers avantages, notamment :

il permet de simplifier l'architecture du véhicule, de réduire le temps de montage, et donc d'abaisser le prix du véhicule ;

il permet d'améliorer l'accessibilité au moteur et aux différents organes du véhicule ;

il permet d'augmenter l'espace disponible sur le châssis, ce qui permet de loger des accessoires supplémentaires (par exemple un groupe de pompage pour des hydrocarbures).

Bien entendu, chacun des éléments 4, 5, 6, 7, 8, 9, 10, 11, de la traverse 3 peut être réalisé de manière diverse.

Suivant un mode de réalisation préféré, il s'agit de ferrures en U ou profilées, ou d'éléments de tôle découpés et caissonnés suivant une section transversale carrée, rectangulaire, en oméga, etc.

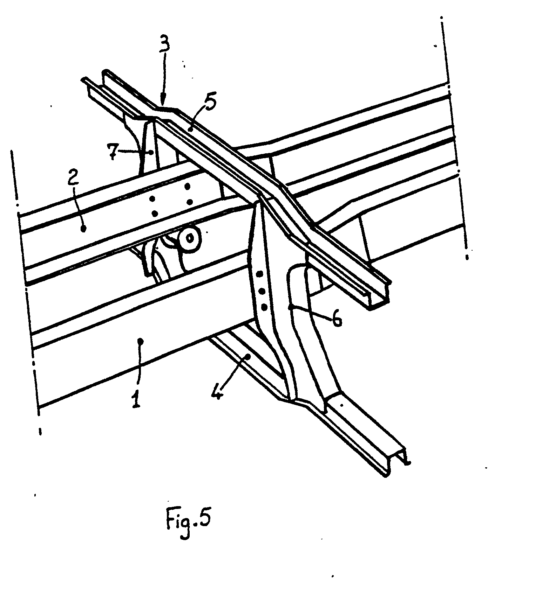

Dans la variante de la figure 5, les éléments 4, 5, 6, 7 du cadre 3 ont une section profilée en oméga qui leur confère le maximum de rigidité et de légèreté, tout en permettant une fixation facile des organes mentionnés ci-dessus.

Les éléments 8-4-9 sont alors réalisés d'une seule pièce en tôle pliée et emboutie. Il en va de même pour les éléments 5, 10 et 11. Dans ce cas, on peut notamment supprimer les entretoises 17 et 18, c'est-à-dire fixer les ailes des montants 6 et 7 directement sur la face externe des longerons 1 et 2.

## Revendications

1. Châssis de véhicule utilitaire comprenant au moins une traverse (3) de forme composite fixée sur au moins deux longerons (1) et (2) du châssis, et prévue pour recevoir les fixations d'organes, caractérisé en ce que ladite traverse a la forme générale d'un cadre rectangulaire constitué par deux grands côtés horizontaux et par deux montants, et disposé autour des longerons (1) et (2) du châssis qui traversent ce cadre, chacun desdits montants (6) et (7) étant fixé sur la face extérieure du longeron (1) (2) correspondant.

2. Châssis de véhicule suivant la revendication 1, caractérisé en ce que les grands côtés horizontaux (4) et (5) du cadre rectangulaire sont prolongés, chacun, par un bras d'appui (8), (9) ou (10), (11).

3. Châssis de véhicule suivant l'une quelconque des revendications précédentes, caractérisé en ce que des moyens de fixation sont prévus sur la traverse (3) pour recevoir les organes du véhicule à fixer dans cette zone, tels que le radiateur, le filtre à air, la bâche à gazole, le réservoir d'air comprimé, le coffre à batterie électrique, le silencieux d'échappement, les diverses canalisations.

4. Châssis de véhicule suivant l'une quelconque des revendications précédentes, caractérisé en ce que deux goussets de renfort (12) et (13) sont prévus de part et d'autre de chaque montant (6), (7) et sur toute sa hauteur notamment dans la zone des deux points de jonction triples situés :

d'une part, entre le sommet du montant (6) ou (7), l'extrémité du côté supérieur (4) et le bras correspondant (8) ou (9) ;

d'autre part, entre la base du montant (6) ou (7), l'extrémité du côté inférieur (5) et le bras correspondant (10) ou (11).

5. Châssis de véhicule suivant l'une quelconque des revendications précédentes, caractérisé en ce que le côté (4) est situé plus bas que le bras (8) et (9) le prolongeant.

6. Châssis de véhicule suivant l'une quelconque des revendications précédentes, caractérisé en ce que le côté (5) est situé plus haut que les bras (10) et (11) le prolongeant.

7. Châssis de véhicule suivant l'une quelconque des revendications précédentes, caractérisé en ce que les bras (8), (9), (10), (11), les côtés (4), (5) et les montants (6), (7) sont creux et à section rectangulaire, ou carrée ou en oméga.

8. Châssis de véhicule suivant la revendication 4, caractérisé en ce qu'une entretoise (17) est intercalée entre le longeron (1) et le montant (6), tandis qu'une entretoise (18) est intercalée entre le longeron (2) et le montant (7).

## Claims

1. The chassis of a utility vehicle comprising at least one traverse (3) of a composite shape fixed to at least two side-members of the chassis, and intended to take the attachments of components, characterised in that the said traverse has the general shape of a rectangular frame constituted by two long horizontal sides and by two verticals, and arranged around the side-members (1) and (2) of the chassis which pass through this frame, each of the said verticals (6) and (7) being fixed to the exterior face of the corresponding side-member (1), (2).

2. A vehicle chassis according to Claim 1, characterised in that the long hortizontal sides (4) and (5) of the rectangular frame are each extended by a support arm (8), (9) or (10), (11).

3. A vehicle chassis according to either of the preceding claims, characterised in that means of attachment are provided on the traverse (3) to receive the components of the vehicle to be fixed in this region, such as the radiator, the air filter, the diesel tank, the compressed air tank, the battery box, the exhaust silencer, the various pipe-work.

4. A vehicle according to any one of the preceding claims, characterised in that two reinforcing plates (12) and (13) are provided one on each side of each vertical (6), (7) running throughout its height principally in the zone of the two points of triple junction :

on the one hand, between the top of the vertical (6) or (7), the end of the upper side (4) and the corresponding arm (8) or (9) ;

on the other hand, between the base of the vertical (6) or (7), the end of the lower side (5) and the corresponding arm (10) or (11).

5. A vehicle chassis according to any one of the preceding claims, characterised in that the side (4) is located lower than the arms (8).

6. A vehicle chassis according to any one of the preceding claims, characterised in that the side (5) is located higher than the arms (10) and (11) which extend it.

7. A vehicle chassis according to any one of the preceding claims, characterised in that the arms (8), (9), (10), (11), the sides (4), (5) and the verticals (6), (7) are hollow and with a rectangular, square or omega section.

8. A vehicle chassis according to Claim 4, characterised in that a spacer (17) is interposed between the side-member (1) and the vertical (6) whilst a spacer (18) is interposed between the side-member (2) and the vertical (7).

**Patentansprüche**

1. Fahrgestell für ein Nutzfahrzeug mit wenigstens einer aus Teilen zusammengebauten Traverse (3), die an wenigstens zwei Längsträgern (1) und (2) des Fahrgestelles befestigt ist und dazu dient, Halterungen für Bauteile aufzunehmen, dadurch gekennzeichnet, daß die Traverse im wesentlichen die Gestalt eines rechtwinkligen Rahmens hat, der aus zwei horizontalen Längsseiten und zwei Stützen besteht und der die Längsträger (1) und (2) des Fahrgestelles, die durch diesen Rahmen hindurchgeführt sind, umschließt und daß jede Stütze (6, 7) an der Außenfläche des entsprechenden Längsträgers (1) befestigt ist.

2. Fahrgestell nach Anspruch 1, dadurch gekennzeichnet, daß die großen horizontalen Seiten (4, 5) des rechteckigen Rahmens jeweils durch einen Tragarm (8, 9) und (10, 11) verlängert sind.

3. Fahrgestell nach einem der Ansprüche 1 oder 2, dadurch gekennzeichnet, daß die Befestigungsmittel an der Traverse (3) vorgesehen sind, um die in diesem Bereich zu befestigenden Bauteile des Fahrzeuges aufzunehmen, wie den Kühler, das Luftfilter, den Ölbehälter, den Druckluftbehälter, den Batteriebehälter, den Auspuff sowie verschiedene Leitungen.

4. Fahrgestell nach einem der Ansprüche 1 bis 3, dadurch gekennzeichnet, daß zwei Versteifungseckbleche (12, 13) an der jeweiligen Stütze vorgesehen sind und angeordnet sind auf dessen gesamter Höhe, insbesondere im Bereich der beiden dreifachen Verbindungspunkte:

einerseits zwischen dem oberen Ende der Stütze (6) oder (7), dem Ende der oberen Seite (4) und dem entsprechenden Arm (8) oder (9);

andererseits zwischen dem Fuß der Stütze (6) oder (7), dem Ende der unteren Seite (5) und dem entsprechenden Arm (10) oder (11).

5. Fahrgestell nach einem der Ansprüche 1 bis 4, dadurch gekennzeichnet, daß die Seite (4) niedriger als die sie verlängernden Arme (8) und (9) ist.

6. Fahrgestell nach einem der Ansprüche 1 bis 5, dadurch gekennzeichnet, daß die Seite (5) höher als die sie verlängernden Arme (10) und (11) ist.

7. Fahrgestell nach einem der Ansprüche 1 bis 6, dadurch gekennzeichnet, daß die Arme (8, 9, 10, 11), die Seiten (4, 5) und die Stützen (6, 7) hohl sind und einen rechteckigen, quadratischen oder omega-förmigen Querschnitt haben.

8. Fahrgestell nach Anspruch 4, dadurch gekennzeichnet, daß eine Versteifung (17) zwischen dem Längsträger (1) und der Stütze (6) eingefügt ist, während eine Versteifung (18) zwischen dem Längsträger (2) und der Stütze (7) eingefügt ist.

Fig. 1

0 092 493

Fig 2

Fig.3

Fig.4

0 092 493

Fig.5